# EUROPÄISCHE PATENTSCHRIFT

(11) **EP 2 428 480 B1**
(45) Veröffentlichungstag und Bekanntmachung des Hinweises auf die Patenterteilung: **02.12.2015**
(21) Anmeldenummer: 11006403.7
(22) Anmeldetag: 04.08.2011
(51) Int. Cl.: B65H 54/22, B65H 54/74, H02P 8/16, D01H 4/44, D01H 1/16, D01H 4/42, D01H 13/16, H02P 5/46, H02P 8/12, H02P 8/14

(54) **Verfahren zum Betreiben einer Kreuzspulen herstellenden Textilmaschine und Kreuzspulen herstellende Textilmaschine**
Method for operating a textile machine for creating cross-wound spools and textile machine for creating cross-wound spools
Procédé de fonctionnement d'une machine textile fabriquant des bobines croisées et machine textile fabriquant des bobines croisées

(30) Priorität: 09.09.2010 DE 102010044901
(43) Veröffentlichungstag der Anmeldung: 14.03.2012
(73) Patentinhaber: Saurer Germany GmbH & Co. KG, 42897 Remscheid (DE)
(72) Erfinder: Geisler, Robert, 41844 Wegberg (DE)
(74) Vertreter: Hamann, Arndt

(56) Entgegenhaltungen:
- EP-A2- 1 895 675
- DE-A1- 2 258 862
- DE-A1- 4 003 522
- DE-A1- 10 348 689
- DE-A1- 19 928 357
- DE-A1-102005 020 579
- JP-A- 2009 060 744
- US-A- 3 764 872
- US-A1- 2004 056 629

## Beschreibung

Die Erfindung betrifft ein Verfahren zum Betreiben einer Kreuzspulen herstellenden Textilmaschine und eine Kreuzspulen herstellende Textilmaschine mit einer Vielzahl von gleichartigen Arbeitsstellen, die jeweils mehrere als Schrittmotoren ausgebildete Einzelantriebe zum Antreiben von Handhabungseinrichtungen der Arbeitsstelle aufweisen, wobei jedem Schrittmotor eine Leistungsendstufe zugeordnet ist, mittels derer ein Sollwert für den Betrag des Stromes eingestellt wird.

Kreuzspulen herstellende Textilmaschinen sind sowohl Spulmaschinen als auch Spinnmaschinen, wie zum Beispiel Offenend-Rotorspinnmaschinen. Spulmaschinen spulen ein Garn von einer Ablaufspule auf eine Kreuzspule. Ablaufspulen können dabei von Ringspinnmaschinen stammende Spinnkopse sein, die zu Kreuzspulen umgespult werden. Das Garn kann auch aus einer Offenend-Spinneinrichtung, auch als Spinnrotor bezeichnet, abgezogen und dann auf eine Kreuzspule gewickelt werden.

Die DE 101 39 075 offenbart eine Offenend-Rotorspinnmaschine mit einer Vielzahl gleichartiger Arbeitsstellen, die jeweils eine Offenend-Spinnvorrichtung zur Fertigung eines Fadens, eine Spulvorrichtung mit einem Spulenrahmen und einer Fadenchangiereinrichtung zur Herstellung einer Kreuzspule, eine schwenkbar gelagerte, unterdruckbeaufschlagbare Saugdüse sowie eine Einrichtung zum Vorbereiten eines zum Wiederanspinnen benötigten Fadenendes aufweisen. Ferner weist jede Arbeitsstelle eine Spulvorrichtung mit einer durch einen reversiblen Einzelantrieb beaufschlagten Antriebstrommel zum Antreiben einer Kreuzspule und einer einzelmotorisch angetriebenen Fadenchangiereinrichtung zum definierten Verlegen des auf die Kreuzspule auflaufenden Fadens auf. Es ist eine über einen Einzelantrieb zwischen einer Fadenaufnahmestellung im Bereich der Spulvorrichtung und einer Fadenübergabestellung im Bereich eines Anspinnorgans verschwenkbare Saugdüse vorhanden. Jede Arbeitsstelle verfügt über eine einzelmotorisch angetriebene Fadenabzugseinrichtung, und die Einzelantriebe sind durch einen Arbeitsstellenrechner definiert ansteuerbar.

Die DE 101 39 075 weicht damit von dem traditionellen Konzept einer Offenend-Rotorspinnmaschine ab, bei dem die Handhabungseinrichtungen der Arbeitsstellen zentral angetrieben werden und die Kraft zu den Arbeitsstellen mittels maschinenlanger Wellen oder Riemen übertragen wird.

Als Einzelantriebe werden verzugsweise Schrittmotoren eingesetzt. Diese sind einfacher im Aufbau und damit preisgünstiger als Drehstrommotoren und weniger verschleißanfällig als Gleichstrommotoren. Dementsprechend einfach ist auch die Ansteuerung der Schrittmotoren.

Die DE 10 2005 020 579 A1 offenbart ebenfalls eine Kreuzspulen herstellende Textilmaschine mit Arbeitsstellen, die jeweils als Schrittmotoren ausgebildete Einzelantriebe zum Antreiben von Handhabungseinrichtungen der Arbeitsstelle aufweisen. Die Schrittmotoren mehrerer Arbeitsstellen sind zur Speisung mit elektrischer Energie an ein gemeinsames Netzteil angeschlossen.

Schrittmotorsteuerungen werden meist für drei Betriebszustände angeboten. Im Stillstand werden Wicklungen beziehungsweise Phasen des Schrittmotors mit geringem Standstrom bestromt. Beim Beschleunigen des Schrittmotors wird ein Strom mit einer sehr großen Stromamplitude eingesetzt. Hat der Schrittmotor seine Betriebsdrehzahl erreicht, so kann in einen Laufbetriebszustand umgeschaltet werden, in dem die Stromamplitude der Wicklungsströme zwischen der im Stillstand und in der Beschleunigungsphase liegt. Aufgrund der einfachen Ansteuerung kommen Schrittmotoren mit Prozessoren geringer Rechenleistung aus.

Aus der DE 40 03 552 A1 ist es bekannt, bei einem Schrittmotor den Istwert des Stromes durch eine Regelung auf einen vorgegebenen Stromsollwert einzustellen. Eine einfache Möglichkeit eine Stromregelung bei Schrittmotoren zu realisieren, ist die in der DE 2 258 862 A1 offenbarte Zweipunktregelung.

Bei der Anwendung von Schrittmotoren in Kreuzspulen herstellenden Textilmaschinen ist die Definition weiterer Betriebszustände erforderlich, da beispielsweise bei einer Offenend-Rotorspinnmaschine im normalen Spinnbetrieb eine andere Drehzahl und ein anderes Moment erforderlich sind als zum Beispiel beim Anspinnen. Die Fadenchangiereinrichtung muss sich in die eine und die andere Richtung bewegen können. Mit Annäherung an die Stirnseite der Spule wird die Geschwindigkeit des Fadenführers beziehungsweise die Drehzahl des Schrittmotors reduziert und der Motor schließlich reversiert.

Aus diesem Grund wird Schrittmotoren, die Handhabungseinrichtungen einer Offenend-Rotorspinnmaschine antreiben, ein festes Bewegungsprofil zugeordnet. Dieses Profil beinhaltet die Motorfrequenzen, das heißt, die Frequenz des eingeprägten Stromes, und die zugehörigen Beträge der Ströme. Im Falle einer sinusförmigen Speisung wird der Betrag durch die Stromamplitude angegeben. Bei einer blockförmigen Speisung wird der Blockstrom angegeben. Die Motorfrequenz gibt dabei die Drehzahl vor und der Betrag des Stromes das Antriebsmoment. Der Betrag des Stromes wird auf das Lastmoment in dem jeweiligen Betriebszustand abgestimmt. Der in dem Profil abgelegte Betrag des Stromes wird der Leistungsendstufe des Schrittmotors als Sollwert vorgegeben. Damit wird bei dem gleichen Betriebszustand immer der gleiche Sollwert vorgegeben. Dies ist ohne weiteres möglich, da sich das Lastmoment an einer Arbeitsstelle nur mit den definierten Betriebszuständen ändert und bei Wiederkehren eines bestimmten Betriebszustandes im Wesentlichen gleich ist.

Da die Arbeitsstellen alle gleich aufgebaut sind, werden die gleichen Profile für die entsprechenden Handhabungseinrichtungen der anderen Arbeitsstellen verwendet.

Es ist allerdings zu beachten, dass das Antriebsmoment nicht nur das Nutzlastmoment, also das Moment, das die gewünschte Bewegung der Handhabungseinrichtung hervorruft, sondern auch Momente, die eine Verlustleistung hervorrufen, überwinden muss. Zu Verlusten führen insbesondere Reibmomente. Die Reibmomente sind jedoch stark vom Einbau der Schrittmotoren und der Handhabungseinrichtungen abhängig. Da für alle Arbeitsstellen jeweils der gleiche Betrag des Stromes und damit das gleiche Antriebsmoment eingestellt werden, muss der Strom für den ungünstigsten Fall, also für das größte zu erwartende Reibmoment, ausgelegt werden. Das hat zur Folge, dass an einzelnen Arbeitsstellen ein größerer Strom eingeprägt wird als eigentlich erforderlich. Da die Reibmomente im Hinblick auf die Gesamtantriebsmomente jedoch klein sind, wird dadurch die Funktion an den einzelnen Arbeitsstellen nicht beeinträchtigt.

Im Hinblick auf die Vielzahl der Arbeitsstellen mit jeweils mehreren Schrittmotoren summiert sich jedoch die Leistung, die zur Deckung der eigentlich nicht erforderlichen Ströme bereitgestellt werden muss. Dadurch wird nicht nur der Energieverbrauch der Textilmaschine unnötig in die Höhe getrieben, vielmehr müssen die anderen Komponenten, insbesondere die Netzteile, die die Schrittmotoren und gegebenenfalls andere elektrischen Verbraucher mit Energie versorgen, für die erhöhte Leistung ausgelegt sein. Die Netzteile wandeln dabei die Spannung eines elektrischen Energieversorgungsnetzes in eine geeignete Spannung zur Versorgung der Leistungsendstufen der Schrittmotoren um.

Es ist daher die Aufgabe der vorliegenden Erfindung, die Energieversorgung der Schrittmotoren von Kreuzspulen herstellenden Textilmaschinen bedarfsgerecht zu verbessern.

Die Aufgabe wird erfindungsgemäß durch die kennzeichnenden Merkmale des Verfahrensanspruches 1 sowie des Vorrichtungsanspruches 4 gelöst. Vorteilhafte Weiterbildungen der Erfindung sind Gegenstand der Unteransprüche.

Zur Lösung der Aufgabe werden Schrittmotoren mehrerer Arbeitsstellen von einem Netzteil mit begrenzter Leistung gespeist. Ferner wird eine Drehzahlschwankungen repräsentierende Größe mindestens der Schrittmotoren einer Handhabungseinrichtung der Vielzahl von Arbeitsstellen erfasst, der Sollwert für den Betrag des Stromes dieser Schrittmotoren wird in Abhängigkeit von der die Drehzahlschwankungen repräsentierenden Größe angepasst und dadurch die aus dem Netzteil aufgenommene Leistung begrenzt.

Die Erfindung zielt darauf ab, die Leistung des Netzteils nicht beliebig zu erhöhen, sondern in intelligenter Form die gesamte Leistungsaufnahme der an ein Netzteil angeschlossenen Schrittmotoren zu begrenzen. Wenn das reale Reibmoment kleiner ist als das bei der Festlegung des Sollwertes für den Betrag des Stromes zu Grunde gelegte, tritt eine unerwünschte Beschleunigung des Schrittmotors auf. Diese Beschleunigung wird jedoch bei Erreichen des nächsten Schrittes unterbrochen, da die Weiterschaltung der Schritte durch die Frequenz des Stromes bestimmt wird und nicht durch seinen Betrag. Durch das zusätzliche Moment wird der Schrittmotor zunächst beschleunigt und dann wieder abgebremst. Auf diese Weise entsteht eine Drehzahlschwankung beziehungsweise eine temporäre Abweichung von der durch die Frequenz des Stromes festgelegten Drehzahl. Wenn der Betrag des Stromes zu klein ist, kommt es zu einem Schrittverlust und damit auch zu einer Drehzahlschwankung, wobei der Schrittmotor zunächst verzögert wird. Aus diesem Grund wird der Sollwert für den Betrag des Stromes in Abhängigkeit von der die Drehzahlschwankungen repräsentierenden Größe angepasst und zwar bevorzugt im Sinne einer Regelung. Für die vorliegende Erfindung sind aber zwei weitere Aspekte wesentlich. Zum einen müssen nicht die Sollwerte aller Schrittmotoren einer Arbeitsstelle auf die beschriebene Weise angepasst werden. Es ist in der Regel ausreichend, wenn jeweils die Schrittmotoren von ein oder zwei Handhabungseinrichtungen einer Arbeitsstelle angepasst werden. Vorteilhafterweise werden die Schrittmotoren mit der größten Leistungsaufnahme gewählt. So wird der größte Effekt auf die Gesamtleistungsaufnahme der Schrittmotoren erzielt. Zum anderen ist entscheidend, dass mehrere dieser Schrittmotoren, gegebenenfalls zusammen mit anderen Schrittmotoren oder elektrischen Verbrauchern, von einem Netzteil gespeist werden. Nur dann muss das Netzteil aufgrund der statistischen Verteilung der tatsächlichen Reibmomente nicht für den ungünstigsten Fall ausgelegt werden und die aus dem Netzteil aufgenommene beziehungsweise von dem Netzteil abgegebene Leistung wird tatsächlich begrenzt.

Die Begrenzung der Leistung erfolgt durch eine Reduzierung der Leistungsaufnahme der betreffenden Schrittmotoren. Durch die oben beschriebene Anpassung der Stromsollwerte wird die Verlustleistung der Schrittmotoren reduziert, da das unnötige Abbremsen und Beschleunigen der Schrittmotoren vermieden wird. Die Reduzierung der Verlustleistung hat zusätzlich den positiven Effekt, dass die Erwärmung der Schrittmotoren und damit der Arbeitstellen verringert wird. Eine zu hohe Temperatur kann sich negativ auf den Fertigungsprozess der Textilmaschine auswirken.

Um die Drehzahlschwankungen zu erfassen, können die betreffenden Schrittmotoren mit Positionssensoren ausgerüstet sein. Dies bedeutet jedoch zusätzlichen Hardwareaufwand, der sich bei der Vielzahl von Schrittmotoren entsprechend summiert.

Deshalb wird vorteilhafterweise als die Drehzahlschwankungen repräsentierende Größe die Stromänderung nach einem Schaltvorgang der Leistungsendstufe erfasst. Mittel zur Erfassung des Stromes sind im Regelfall sowieso vorhanden, um den vorgegebenen Sollstrom einzustellen. Die Drehzahl beeinflusst die induzierte Gegenspannung, die dem Aufbau des Stromes entgegensteht.

Je größer die Drehzahl ist, desto größer ist die induzierte Spannung und desto geringer ist der Stromanstieg. Insofern werden durch den Verlauf der Stromänderungen die Drehzahlschwankungen repräsentiert.

Um den Sollwert für den Betrag des Stromes anzupassen, kann die Abweichung der Stromänderung von Referenzwerten erfasst werden, und der Sollwert wird in Abhängigkeit von der Abweichung angepasst.

Zur Lösung der Aufgabe wird ferner eine Kreuzspulen herstellende Textilmaschine mit einer Vielzahl von gleichartigen Arbeitsstellen vorgeschlagen, die jeweils mehrere als Schrittmotoren ausgebildete Einzelantriebe zum Antreiben von Handhabungseinrichtungen der Arbeitsstelle aufweisen, wobei jedem Schrittmotor eine Leistungsendstufe zugeordnet ist, mittels derer ein Sollwert für den Betrag des Stromes eingestellt wird. Erfindungsgemäß sind Schrittmotoren mehrerer Arbeitsstellen zur Speisung mit elektrischer Energie an ein Netzteil mit begrenzter Leistung angeschlossen, und es sind Mittel zur Erfassung einer Drehzahlschwankungen repräsentierenden Größe mindestens der Schrittmotoren einer Handhabungseinrichtung der Vielzahl von Arbeitsstellen vorhanden. Weiter sind Steuermittel zur Anpassung des Sollwertes für den Betrag des Stromes dieser Schrittmotoren in Abhängigkeit von der die Drehzahlschwankungen repräsentierenden Größe vorhanden und damit zur Begrenzung der aus dem Netzteil aufgenommenen Leistung ausgebildet.

Die Steuermittel der erfindungsgemäßen Textilmaschine müssen im Vergleich zum Stand der Technik, gemäß dem feste Sollwerte vorgegeben werden, zwar Prozessoren mit einer höheren Rechenleistung eingesetzt werden, es können jedoch Netzteile geringerer Nennleistung verwendet werden. Dadurch wird der oben beschriebene Mehraufwand mehr als ausgeglichen.

Gemäß einer bevorzugten Ausführungsform der erfindungsgemäßen Textilmaschine ist eine Handhabungseinrichtung, deren Schrittmotor mit in Abhängigkeit von der die Drehzahlschwankungen repräsentierenden Größe angepasstem Sollwert für den Betrag des Stromes betreibbar ist, als Fadenchangiereinrichtung zum definierten Verlegen des auf die Kreuzspule auflaufenden Fadens ausgebildet. Die Fadenchangiereinrichtung ist einer der größten elektrischen Verbraucher einer Kreuzspulen herstellenden Textilmaschine.

Gemäß einer weiteren bevorzugten Ausführungsform der erfindungsgemäßen Textilmaschine ist sie als Offenend-Rotorspinnmaschine mit einer Spinnvorrichtung an jeder Arbeitsstelle ausgebildet und eine Handhabungseinrichtung, deren Schrittmotor mit in Abhängigkeit von der die Drehzahlschwankungen repräsentierenden Größe angepasstem Sollwert für den Betrag des Stromes betreibbar ist, ist als Fadenabzugseinrichtung ausgebildet, die den gesponnenen Faden aus der Spinnvorrichtung abzieht. Auch die Fadenabzugseinrichtung ist einer der größeren elektrischen Verbraucher. Die Anpassung des Sollstromes der Fadenabzugseinrichtung kann alternativ oder zusätzlich zu der Anpassung des Sollstromes einer Fadenchangiereinrichtung erfolgen.

Gemäß einer weiteren Ausführungsform der erfindungsgemäßen Textilmaschinen sind Steuermittel zur Anpassung des Sollwertes für den Betrag des Stromes eines Schrittmotors in Abhängigkeit von der die Drehzahlschwankungen repräsentierenden Größe an jeder Arbeitstelle vorhanden. Theoretisch wäre es denkbar die Sollwerte der Beträge der Ströme einmalig an die jeweiligen Schrittmotoren anzupassen. In der Praxis erscheint dies jedoch wenig tauglich, da die Bestimmung der Sollwerte erst im vollständig montierten Zustand erfolgen kann und damit erst bei der Inbetriebsetzung der Maschine. Das manuelle Einstellen mit Hilfe eines externen Steuermittels würde sich recht aufwendig gestalten. Außerdem wäre dazu in jedem Fall an jeder Arbeitsstelle eine Schnittstelle für das externe Steuermittel vorzusehen. Deshalb ist es einfacher, ein fest installiertes Steuermittel an jeder Arbeitsstelle vorzusehen. Dann kann die Anpassung der Sollwerte kontinuierlich erfolgen.

Die Erfindung wird nachfolgend anhand eines in den Zeichnungen dargestellten Ausführungsbeispiels näher erläutert.

Es zeigen:
- Fig. 1: eine erfindungsgemäße Kreuzspulen herstellende Textilmaschine mit einer Vielzahl von gleichartigen Arbeitsstellen;
- Fig. 2: eine Arbeitstelle einer erfindungsgemäßen Textilmaschine mit mehreren als Schrittmotoren ausgebildete Einzelantrieben zum Antreiben von Handhabungseinrichtungen der Arbeitsstellen;
- Fig. 3: eine Leistungsendstufe für eine Phase eines Schrittmotors;
- Fig. 4: den Verlauf des Stromes und der Spannung für eine Phase eines Schrittmotors.

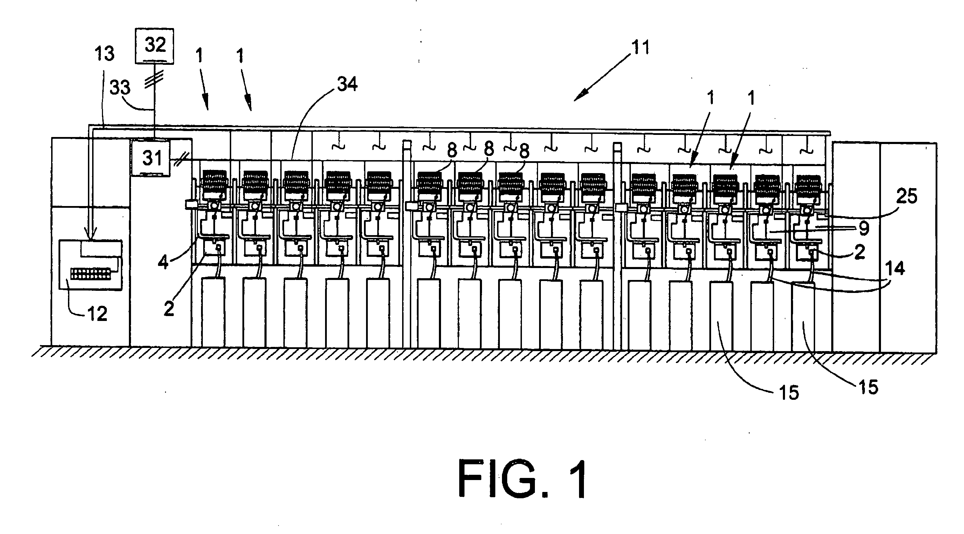

Fig. 1 zeigt eine Offenend-Rotorspinnmaschine 11 mit einer Vielzahl von Arbeitsstellen 1. An jeder Arbeitsstelle 1 wird ein in einer Faserbandkanne 15 bereitgestelltes Faserband 14 einer Offenend-Spinnvorrichtung 2 zugeführt. Aus der Spinnvorrichtung 2 wird ein Spinnfaden 9 abgezogen und auf eine Kreuzspule 8 gewickelt. Die einzelnen Arbeitsstellen 1 weisen jeweils einen Arbeitsstellenrechner 25 auf, der die einzelmotorisch angetriebenen Handhabungseinrichtungen der Arbeitsstelle 1 ansteuert und über ein Bussystem 13 mit einer Zentralsteuereinheit 12 verbunden ist.

Zur Versorgung mit elektrischer Energie ist die Rotorspinnmaschine 11 an ein Energieversorgungsnetz 32 angeschlossen. Das Energieversorgungsnetz stellt im Allgemeinen eine dreiphasige Wechselspannung zur Verfügung. Der Betrag und die Frequenz dieser Spannung hängen von dem jeweiligen Land ab, in dem die Rotorspinnmaschine eingesetzt wird. Über die Netzanschlussleitung 33 wird das Netzteil 31 vom Netz 32 mit elektrischer Energie versorgt. Das Netzteil 31 wandelt die Netzspannung in eine für die Handhabungseinrichtungen geeignete Spannung um. Im vorliegenden Fall ist dies eine Gleichspannung von 36V. Über die Energieversorgungsleitung 34 wird die Gleichspannung den Verbrauchern der Arbeitsstellen 1 zur Verfügung gestellt. In dem dargestellten Ausführungsbeispiel werden sowohl alle Arbeitsstellen als auch alle Verbraucher der Arbeitsstellen von dem gleichen Netzteil 31 versorgt. Es jedoch auch möglich, dass dazu mehrere Netzteile verwandt werden. Dazu können Arbeitsstellen zusammengefasst werden, deren Verbraucher jeweils von einem Netzteil versorgt werden. Dies kann zum Beispiel sinnvoll sein, um die Länge der Energieversorgungsleitungen 34 zu minimieren und damit die Leitungsverluste zu reduzieren. Die im Vergleich zur Netzspannung geringere Versorgungsspannung der Arbeitsstellen führt zu einer erhöhten Verlustleistung. Auch sind mehrere Netzteile geringerer Nennleistung häufig kostengünstiger als ein Netzteil größerer Nennleistung. Es ist auch möglich, dass nur bestimmte Verbraucher der Arbeitsstellen von demselben Netzteil versorgt werden, weil für verschiedene Verbraucher eine andere Versorgungsspannung erforderlich ist.

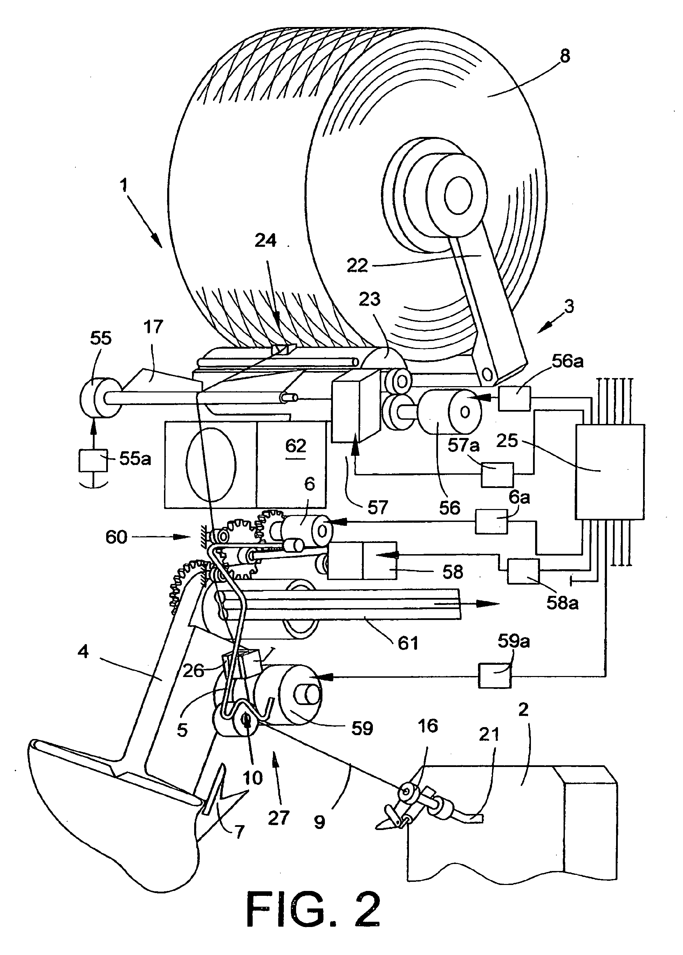

Die Fig. 2 zeigt eine perspektivisch dargestellte Arbeitsstelle 1 und ihre verschiedenen Handhabungseinrichtungen. Derartige Arbeitsstellen 1 verfügen, wie bekannt und daher nur schematisch dargestellt, unter anderem über eine Offenend-Spinnvorrichtung 2 sowie über eine Spulvorrichtung 3. Im Bereich des sogenannten Fadenabzugsröhrchens 21 der Offenend-Spinnvorrichtung 2 ist ein schwenkbar gelagertes Anspinnorgan 16 angeordnet, das den nach einem Fadenbruch durch eine Saugdüse 4 von der Kreuzspule 8 zurückgeholten Faden 9 übernimmt und das Fadenende zum Wiederanspinnen vorbereitet.

Des Weiteren ist in diesem Bereich eine Fadenabzugseinrichtung 27 angeordnet, die sowohl das Abziehen des Spinnfadens 9 aus der Offenend-Spinnvorrichtung 2 während des regulären Spinnbetriebes übernimmt, als auch beim Wiederanspinnen für die Rückführung eines vorbereiteten Fadens 9 in die Offenend-Spinnvorrichtung verantwortlich ist. Die Fadenabzugseinrichtung 27 wird von dem Schrittmotor 59 mit der Leistungsendstufe 59a angetrieben.

Die Spuleinrichtung 3 besteht, wie üblich, aus einem Spulenrahmen 22 zum drehbaren Haltern einer Kreuzspule 8, einer über einen reversierbaren Einzelantrieb angetriebenen Antriebstrommel 23 sowie einer ebenfalls über einen Einzelantrieb angetriebenen Fadenchangiereinrichtung 24. Die Einzelantriebe weisen jeweils einen Schrittmotor und eine Leistungsendstufe auf. Der Schrittmotor der Fadenchangiereinrichtung trägt das Bezugszeichen 57 und die zugeordnete Leistungsendstufe das Bezugszeichen 57a. Der Einzelantrieb der Antriebstrommel 23 wird durch den Schrittmotor 56 und die Leistungsendstufe 56a gebildet. Beide Antriebe werden von dem Arbeitsstellenrechner 25 angesteuert. Vor der Fadenchangiereinrichtung 24 kann außerdem eine Fadenzentriereinrichtung in Form eines schwenkbar gelagerten Zentrierbleches 17 angeordnet sein, das im Bedarfsfall durch einen Antrieb, bestehend aus dem Schrittmotor 55 und der Leistungseinstufe 55a, definiert in den regulären Fadenlaufweg geklappt werden kann. Des Weiteren verfügt die Arbeitsstelle 1 über eine Saugdüse 4, die mittels eines Schrittmotors 6 definiert zwischen einer im Bereich der Spulvorrichtung 3 liegenden Fadenaufnahmestellung und einer im Bereich der Spinnvorrichtung 2 liegenden Fadenübergabestellung verstellbar ist. Dem Schrittmotor 6 ist die Leistungsendstufe 6a zugeordnet.

Die Saugdüse 4 trägt rückseitig ein Fadenfangelement 7, das beispielsweise eine S-förmige Fadenleitkante, eine Fadenfangkontur sowie ein Schaltblech aufweist. Schließlich ist im Abstand vor dem regulären Fadenlaufweg der Arbeitsstelle 1 noch eine stationäre Fadenleiteinrichtung 5 angeordnet, die eine nach unten hin offene Fangkontur 10 besitzt.

Jede der Arbeitsstellen 1 weist außerdem einen Fadenwächter 26, eine Paraffiniereinrichtung 62 sowie Fadenspeichereinrichtungen 60 beziehungsweise 61 auf. Die Fadenspeichereinrichtung 61 ist dabei als unterdruckbeaufschlagbare Speicherdüse ausgebildet, während die Speichereinrichtung 60 als mechanischer Fadenspeicher ausgebildet ist. Das heißt, zwischen zwei stationären Fadenleitorganen ist ein verstellbares Fadenleitorgan angeordnet, das, durch einen Schrittmotor 58 mit einer Leistungsendstufe 58a beaufschlagt, relativ zum Fadenlaufweg beweglich angeordnet ist.

Die Funktion der beschriebenen Handhabungseinrichtungen ist beispielsweise in der eingangs zitierten DE 101 39 075 A1 genauer beschrieben, so dass an dieser Stelle darauf verzichtet wird.

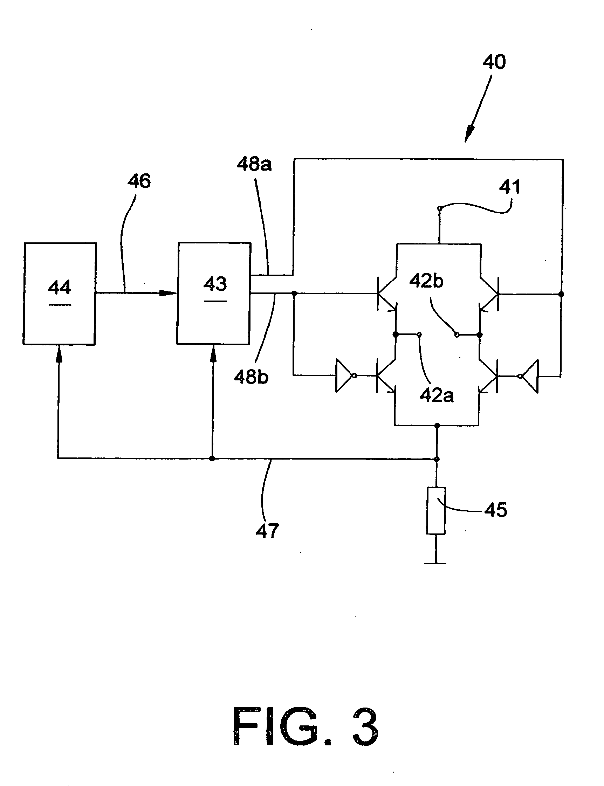

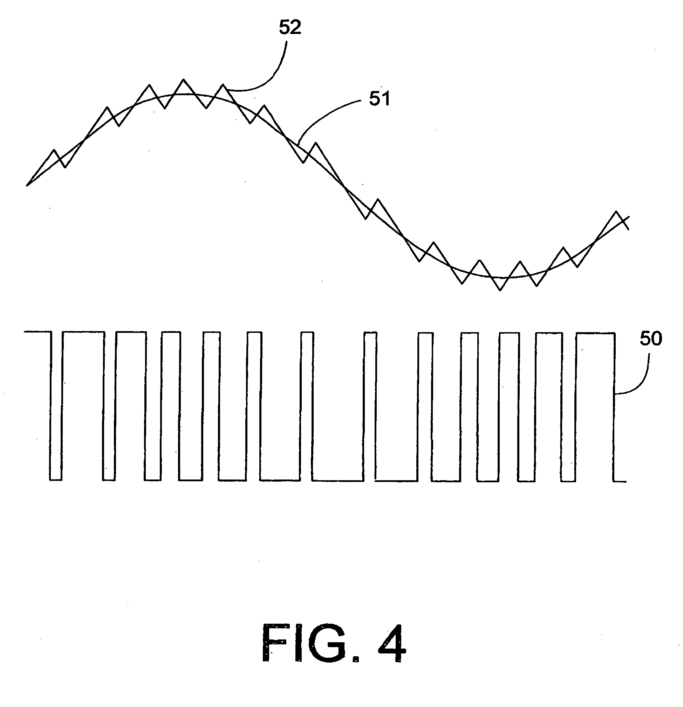

In dem vorliegenden Ausführungsbeispiel weisen die Schrittmotoren 6, 55, 56, 57, 58 und 59 jeweils zwei Phasen auf. Die Leistungsendstufen 6a, 55a, 56a, 57a, 58a und 59a weisen demnach jeweils zwei H-Brücken 40 auf, von denen eine in Fig. 3 dargestellt ist. Die Versorgungsspannung des Netzteils 31 wird an den Anschlusspunkt 41 der H-Brücke 40 angeschlossen. Eine Phase des Schrittmotors ist an die Anschlusspunkte 42a, 42b angeschlossen. Die Transistoren der H-Brücke 40 werden von dem Steuerelement 43 über die Steuerleitungen 48a, 48b angesteuert. Zur Generierung des Pulsmusters 50, wie in Fig. 4 dargestellt, stehen dem Steuerelement 43 der Sollwertverlauf 51 und die Istwerte 52 des Stromes zur Verfügung. Beide Verläufe sind ebenfalls in Fig. 4 dargestellt. In dem Ausführungsbeispiel ist der Sollwertverlauf 51 sinusförmig. Der Stromistwert 52 wird durch Messen der Spannung über dem Messwiderstand 45 ermittelt. Das Messsignal wird an das Steuerelement 43 über die Steuerleitung 47 weitergegeben. Die Stromsollwerte 51 werden dem Steuerelement 43 über die Steuerleitung 46 zur Verfügung gestellt.

Die Generierung des Sollwertverlaufes 51 erfolgt mittels des Steuerelements 44. Dazu werden dem Steuerelement 44 ebenfalls die Istströme 52 zur Verfügung gestellt. Mittels des Steuerelementes 44 wird die Stromänderung nach einem Schaltvorgang der Leistungsendstufe ausgewertet. Die Schaltvorgänge sind durch das Pulsmuster 50 bestimmt. Der Stromverlauf wird dazu mit einem Referenzverlauf verglichen. Daraus lässt sich ablesen, ob das Antriebsmoment und damit die Stromamplitude richtig auf das tatsächlich auftretende Gegenmoment abgestimmt sind. Wenn dies nicht der Fall ist, wird die Stromamplitude des Sollwertverlaufes 51 angepasst. Die Frequenz bleibt dagegen unverändert. Diese ist durch die für den jeweiligen Handhabungsvorgang erforderliche Drehzahl vorgegeben. Durch die Stromamplitude und die Frequenz ist der sinusförmige Sollwertverlauf eindeutig bestimmt.

## Patentansprüche

1. Verfahren zum Betreiben einer Kreuzspulen herstellenden Textilmaschine (11) mit einer Vielzahl von gleichartigen Arbeitsstellen (1), die jeweils mehrere als Schrittmotoren (6, 55, 56, 57, 58, 59) ausgebildete Einzelantriebe zum Antreiben von Handhabungseinrichtungen (4, 17, 23, 24, 60, 27) der Arbeitsstelle (1) aufweisen, wobei jedem Schrittmotor (6, 55, 56, 57, 58, 59) eine Leistungsendstufe (6a, 55a, 56a, 57a, 58a, 59a) zugeordnet ist, mittels derer ein Sollwert für den Betrag des Stromes eingestellt wird, wobei Schrittmotoren (6, 55, 56, 57, 58, 59) mehrerer Arbeitsstellen (1) von einem Netzteil (31) mit begrenzter Leistung gespeist werden,
**dadurch gekennzeichnet, dass**
eine Drehzahlschwankungen repräsentierende Größe mindestens der Schrittmotoren (6, 55, 56, 57, 58, 59) einer Handhabungseinrichtung (4, 17, 23, 24, 60, 27) der Vielzahl von Arbeitsstellen (1) erfasst wird, der Sollwert für den Betrag des Stromes dieser Schrittmotoren (6, 55, 56, 57, 58, 59) in Abhängigkeit von der die Drehzahlschwankungen repräsentierenden Größe angepasst und dadurch die aus dem Netzteil (31) aufgenommene Leistung begrenzt wird, wobei die Drehzahlschwankungen durch Beschleunigen und Abbremsen beim Weiterschalten der Schritte durch die Frequenz des Stromes der Schrittmotoren entstehen.

2. Verfahren nach Anspruch 1, **dadurch gekennzeichnet, dass** als die Drehzahlschwankungen repräsentierende Größe die Stromänderung nach einem Schaltvorgang der Leistungsendstufe (6a, 55a, 56a, 57a, 58a, 59a) erfasst wird.

3. Verfahren nach Anspruch 2, **dadurch gekennzeichnet, dass** die Abweichung der Stromänderung von Referenzwerten erfasst wird und in Abhängigkeit von der Abweichung der Sollwert für den Betrag des Stromes angepasst wird.

4. Kreuzspulen herstellende Textilmaschine (11) mit einer Vielzahl von gleichartigen Arbeitsstellen (1), die jeweils mehrere als Schrittmotoren (6, 55, 56, 57, 58, 59) ausgebildete Einzelantriebe zum Antreiben von Handhabungseinrichtungen (4, 17, 23, 24, 60, 27) der Arbeitsstelle (1) aufweisen, wobei jedem Schrittmotor (6, 55, 56, 57, 58, 59) eine Leistungsendstufe (6a, 55a, 56a, 57a, 58a, 59a) zugeordnet ist, mittels derer ein Sollwert für den Betrag des Stromes eingestellt wird, wobei Schrittmotoren (6, 55, 56, 57, 58, 59) mehrerer Arbeitsstellen (1) zur Speisung mit elektrischer Energie an ein Netzteil (31) mit begrenzter Leistung angeschlossen sind,
**dadurch gekennzeichnet, dass** Mittel (45, 47) zur Erfassung einer Drehzahlschwankungen repräsentierenden Größe mindestens der Schrittmotoren (6, 55, 56, 57, 58, 59) einer Handhabungseinrichtung (4, 17, 23, 24, 60, 27) der Vielzahl von Arbeitsstellen (1) sowie Steuermittel (44) zur Anpassung des Sollwertes für den Betrag des Stromes dieser Schrittmotoren (6, 55, 56, 57, 58, 59) in Abhängigkeit von der die Drehzahlschwankungen repräsentierenden Größe vorhanden sind, die zur Begrenzung der aus dem Netzteil (31) aufgenommenen Leistung ausgebildet sind, wobei die Drehzahlschwankungen durch Beschleunigen und Abbremsen beim Weiterschalten der Schritte durch die Frequenz des Stromes der Schrittmotoren entstehen.

5. Kreuzspulen herstellenden Textilmaschine nach Anspruch 4,
**dadurch gekennzeichnet, dass** eine Handhabungseinrichtung (24), deren Schrittmotor (57) mit in Abhängigkeit von der die Drehzahlschwankungen repräsentierenden Größe angepasstem Sollwert für den Betrag des Stromes betreibbar ist, als Fadenchangiereinrichtung (24) zum definierten Verlegen des auf die Kreuzspule (8) auflaufenden Fadens (9) ausgebildet ist.

6. Kreuzspulen herstellenden Textilmaschine nach Anspruch 4 oder 5,
**dadurch gekennzeichnet, dass** die Textilmaschine (11) als Offenend-Rotorspinnmaschine mit einer Spinnvorrichtung (2) an jeder Arbeitsstelle (1) ausgebildet ist und dass eine Handhabungseinrichtung (27), deren Schrittmotor (59) mit in Abhängigkeit von der die Drehzahlschwankungen repräsentierenden Größe angepasstem Sollwert für den Betrag des Stromes betreibbar ist, als Fadenabzugseinrichtung (27) ausgebildet ist, die den gesponnenen Faden (9) aus der Spinnvorrichtung (2) abzieht.

7. Kreuzspulen herstellenden Textilmaschine nach einem der Ansprüche 4 bis 6, **dadurch gekennzeichnet, dass** die Steuermittel (44) zur Anpassung des Sollwertes für den Betrag des Stromes eines Schrittmotors in Abhängigkeit von der die Drehzahlschwankungen repräsentierenden Größe an jeder Arbeitstelle (1) vorhanden sind.

## Claims

1. Method for operating a textile machine producing cross-wound bobbins (11) with a plurality of similar workstations (1), which each comprise a plurality of individual drives in the form of stepping motors (6, 55, 56, 57, 58, 59) for driving handling devices (4, 17, 23, 24, 60, 27) of the workstation (1), wherein to each stepping motor (6, 55, 56, 57, 58, 59) a power output stage (6a, 55a, 56a, 57a, 58a, 59a) is assigned by means of which a reference value is set for the amount of current, wherein stepping motors (6, 55, 56, 57, 58, 59) of a plurality of workstations (1) are supplied by a power supply unit (31) with limited output
**characterised in that**
a variable representing fluctuations in speed of at least the stepping motors (6, 55, 56, 57, 58, 59) of a handling device (4, 17, 23, 24, 60, 27) of the plurality of workstations (1) is determined, the reference value for the amount of current of said stepping motors (6, 55, 56, 57, 58, 59) is adjusted as a function of the variable representing the fluctuations in speed and in this way the output received from the power supply unit (31) is limited, wherein the fluctuations in speed are caused by acceleration and deceleration during the progression of the steps by the frequency of the current of the stepping motors.

2. Method according to claim 1, **characterised in that** as the variable representing the fluctuations in speed the change in current is determined after a switching operation of the power output stage (6a, 55a, 56a, 57a, 58a, 59a).

3. Method according to claim 2, **characterised in that** the deviation of the change in current from reference values is determined and is adjusted as a function of the deviation of the reference value for the amount of current.

4. Textile machine (11) producing cross-wound bobbins comprising a plurality of similar workstations (1), which each comprise a plurality of individual drives in the form of stepping motors (6, 55, 56, 57, 58, 59) for driving handling devices (4, 17, 23, 24, 60, 27) of the workstation (1), wherein a power output stage (6a, 55a, 56a, 57a, 58a, 59a) is assigned to each stepping motor (6, 55, 56, 57, 58, 59), by means of which a reference value is set for the amount of current, wherein stepping motors (6, 55, 56, 57, 58, 59) of a plurality of workstations (1) are connected for supplying electrical power to a power supply unit (31) with limited output,
**characterised in that**
means (45, 47) are provided for detecting a variable representing fluctuations in speed of at least the stepping motors (6, 55, 56, 57, 58, 59) of a handling device (4, 17, 23, 24, 60, 27) of the plurality of workstations (1) as well as control means (44) for adjusting the reference value for the amount of current of said stepping motors (6, 55, 56, 57, 58, 59) as a function of the variable representing fluctuations in speed, which are designed for limiting the output received from the power supply unit (31), wherein the fluctuations in speed are caused by acceleration and deceleration during the progression of the steps by the frequency of the current of the stepping motors.

5. Textile machine producing cross-wound bobbins according to claim 4, **characterised in that** a handling device (24), the stepping motor (57) of which can be operated by a reference value for the amount of current adjusted to the variable representing the fluctuations in speed, is designed as a thread traversing device (24) for defining the placing of thread (9) running onto the cross-wound bobbin (8).

6. Textile machine producing cross-wound bobbins according to either claim 4 or claim 5, **characterised in that** the textile machine (11) is designed as an open end rotor spinning machine with a spinning device (2) at each workstation (1), and **in that** a handling device (27), the stepping motor (59) of which can be operated by a reference value for the amount of current adjusted to the variable representing the fluctuations in speed, is designed as a thread take-off device (27) which draws the spun thread (9) from the spinning device (2).

7. Textile machine producing cross-wound bobbins according to any one of claims 4 to 6, **characterised in that** the control means (44) are provided for adjusting the reference value for the amount of current of a stepping motor as a function of the variable representing the fluctuations in speed at each workstation (1).

## Revendications

1. Procédé dévolu à l'actionnement d'une machine textile (11) produisant des bobines croisées et comprenant une multiplicité de postes de travail (1) de même type qui comportent, à chaque fois, plusieurs entraînements individuels réalisés sous la forme de moteurs pas à pas (6, 55, 56, 57, 58, 59) conçus pour entraîner des dispositifs de manoeuvre (4, 17, 23, 24, 60, 27) du poste de travail (1), un étage (6a, 55a, 56a, 57a, 58a, 59a) de puissance finale, associé à chaque moteur pas à pas (6, 55, 56, 57, 58, 59), assurant le réglage d'une valeur de consigne attribuée à l'intensité du courant, des moteurs pas à pas (6, 55, 56, 57, 58, 59) de plusieurs postes de travail (1) étant alimentés par un bloc d'alimentation (31) à puissance limitée,
**caractérisé par**
la détection d'une grandeur représentative de fluctuations de vitesse angulaire concernant au moins les moteurs pas à pas (6, 55, 56, 57, 58, 59) d'un dispositif de manoeuvre (4, 17, 23, 24, 60, 27) de la multiplicité de postes de travail (1), et par une adaptation de la valeur de consigne attribuée à l'intensité du courant de ces moteurs pas à pas (6, 55, 56, 57, 58, 59) en fonction de ladite grandeur représentative des fluctuations de vitesse angulaire, la puissance absorbée à partir du bloc d'alimentation (31) s'en trouvant ainsi limitée, sachant que lesdites fluctuations de vitesse angulaire sont engendrées par accélération et freinage lors de la poursuite de l'enclenchement des pas de progression, par la fréquence du courant desdits moteurs pas à pas.

2. Procédé selon la revendication 1, **caractérisé par le fait que** la variation de courant est détectée, à l'issue d'un processus de commutation de l'étage (6a, 55a, 56a, 57a, 58a, 59a) de puissance finale, en tant que grandeur représentative des fluctuations de vitesse angulaire.

3. Procédé selon la revendication 2, **caractérisé par le fait que** l'écart de la variation de courant est détecté par des valeurs de référence, et la valeur de consigne attribuée à l'intensité du courant est adaptée en fonction dudit écart.

4. Machine textile (11) produisant des bobines croisées, comprenant une multiplicité de postes de travail (1) de même type qui comportent, à chaque fois, plusieurs entraînements individuels réalisés sous la forme de moteurs pas à pas (6, 55, 56, 57, 58, 59) conçus pour entraîner des dispositifs de manoeuvre (4, 17, 23, 24, 60, 27) du poste de travail (1), un étage (6a, 55a, 56a, 57a, 58a, 59a) de puissance finale, associé à chaque moteur pas à pas (6, 55, 56, 57, 58, 59), assurant le réglage d'une valeur de consigne attribuée à l'intensité du courant, des moteurs pas à pas (6, 55, 56, 57, 58, 59) de plusieurs postes de travail (1) étant connectés à un bloc d'alimentation (31) à puissance limitée, en vue de l'alimentation en énergie électrique,
**caractérisée par**
la présence de moyens (45, 47) affectés à la détection d'une grandeur représentative de fluctuations de vitesse angulaire concernant au moins les moteurs pas à pas (6, 55, 56, 57, 58, 59) d'un dispositif de manoeuvre (4, 17, 23, 24, 60, 27) de la multiplicité de postes de travail (1), ainsi que de moyens de commande (44) qui sont affectés à l'adaptation de la valeur de consigne attribuée à l'intensité du courant de ces moteurs pas à pas (6, 55, 56, 57, 58, 59) en fonction de ladite grandeur représentative des fluctuations de vitesse angulaire, et sont réalisés pour limiter la puissance absorbée à partir du bloc d'alimentation (31), sachant que lesdites fluctuations de vitesse angulaire sont engendrées par accélération et freinage lors de la poursuite de l'enclenchement des pas de progression, par la fréquence du courant desdits moteurs pas à pas.

5. Machine textile produisant des bobines croisées, selon la revendication 4, **caractérisée par le fait qu'**un dispositif de manoeuvre (24), dont le moteur pas à pas (57) peut être actionné avec une valeur de consigne attribuée à l'intensité du courant et adaptée en fonction de la grandeur représentative des fluctuations de vitesse angulaire, est réalisé sous la forme d'un dispositif (24) de déplacement de fil ciblant l'engagement bien défini du fil (9) s'enroulant sur la bobine croisée (8).

6. Machine textile produisant des bobines croisées, selon la revendication 4 ou 5, **caractérisée par le fait que** ladite machine textile (11) est réalisée sous la forme d'une machine à rotors de filature à fibres libérées, comportant un dispositif de filage (2) à chaque poste de travail (1) ; et **par le fait qu'**un dispositif de manoeuvre (27), dont le moteur pas à pas (59) peut être actionné avec une valeur de consigne attribuée à l'intensité du courant et adaptée en fonction de la grandeur représentative des fluctuations de vitesse angulaire, est réalisé sous la forme d'un dispositif (27) d'extraction de fil par lequel le fil filé (9) est extrait dudit dispositif de filage (2).

7. Machine textile produisant des bobines croisées, selon l'une des revendications 4 à 6, **caractérisée par le fait que** les moyens de commande (44), affectés à l'adaptation de la valeur de consigne attribuée à l'intensité du courant d'un moteur pas à pas en fonction de la grandeur représentative des fluctuations de vitesse angulaire, sont présents à chaque poste de travail (1).
